# EUROPÄISCHE PATENTANMELDUNG

(11) **EP 3 483 095 A1**
(43) Veröffentlichungstag der Anmeldung: **15.05.2019**
(21) Anmeldenummer: 18195004.9
(22) Anmeldetag: 18.09.2018
(51) Int. Cl.: B65G 27/04, B65G 27/08

(54) **VIBRATIONSFÖRDERER ZUM FÖRDERN UND/ODER ZUM AUSSORTIEREN UND/ODER ZUM AUSRICHTEN VON EINZELTEILEN**

(30) Priorität: 21.09.2017 AT 508012017
(71) Anmelder: STIWA Automation GmbH, 4800 Attnang-Puchheim (AT)
(72) Erfinder: KRITZINGER, Johann, 4873 Frankenburg (AT); SCHLAGER, Reinhard, 4892 Fornach (AT)
(74) Vertreter: Burger, Hannes

(57) **Zusammenfassung**

Die Erfindung betrifft einen Vibrationsförderer (4) mit
- einer Förderrinne (5);
- einem Förderrinnenträger (6), an welchem die Förderrinne (5) angeordnet ist;
- und einem Vibrationsantrieb (9).

Die Förderrinne (5) ist seitlich am Förderrinnenträger (6) angeordnet.

## Beschreibung

Die Erfindung betrifft einen Vibrationsförderer zum Fördern und/oder zum Aussortieren und/oder zum Ausrichten von Einzelteilen.

Aus der US2830696A und aus der EP0637559A1 sind Vibrationsförderer bekannt, die eine Förderrinne zum Fördern von Schüttgut aufweisen. Die Förderrinne ist an einem Förderrinnenträger angeordnet, wobei der Förderrinnenträger unterhalb der Förderrinne ausgebildet ist.

Derart aufgebaute Vibrationsförderer weisen den Nachteil auf, dass die Förderrinne in einem großen Abstand zum Förderrinnenträger angeordnet ist. Durch die Vibration der Förderrinne werden bei einer derartigen Anordnung der Förderrinne große um eine horizontale Achse wirkende Kippmomente vom Vibrationsförderer hervorgerufen.

Aufgabe der vorliegenden Erfindung war es, die Nachteile des Standes der Technik zu überwinden und einen verbesserten Vibrationsförderer zur Verfügung zu stellen.

Diese Aufgabe wird durch eine Vorrichtung und ein Verfahren gemäß den Ansprüchen gelöst.

Erfindungsgemäß ist ein Vibrationsförderer vorgesehen. Der Vibrationsförderer umfasst:
- eine Förderrinne;
- einen Förderrinnenträger, an welchem die Förderrinne angeordnet ist;
- einen Vibrationsantrieb

Die Förderrinne ist seitlich am Förderrinnenträger angeordnet.

Der erfindungsgemäße Vibrationsförderer weist den Vorteil auf, dass die vom Vibrationsförderer verursachten Kippmomente, welche um eine horizontale Achse wirken, vermindert werden. Dies erhöht die Laufruhe des Vibrationsförderers, da die in den Boden der Maschinenhalle eingeleiteten Kräfte vermindert werden können.

Weiters kann vorgesehen sein, dass die Förderrinne in einem seitlichen Abstand zwischen 1 mm und 200 mm, insbesondere zwischen 5 mm und 100 mm, bevorzugt zwischen 10 mm und 50 mm zum Förderrinnenträger beabstandet ist. Durch diese Maßnahme kann sichergestellt werden, dass die aus der Förderrinne ausgeschiedenen Einzelteile durch den Spalt zwischen dem Förderrinnenträger und der Förderrinne wieder zurück in den Schüttgutbehälter fallen können.

Weiters kann es zweckmäßig sein, wenn der Förderrinnenträger mittels zumindest einem ersten Federelement mit einem Basiselement gekoppelt ist. Von Vorteil ist hierbei, dass durch diese Maßnahme der Förderrinnenträger relativ zum Basiselement in Schwingung versetzt werden kann.

Ferner kann vorgesehen sein, dass der Förderrinnenträger eine erste Seitenwand und eine zweite Seitenwand aufweist, welche an einer Oberseite des Förderrinnenträgers des mittels einem oberen Koppelabschnitt und an einer Unterseite des Förderrinnenträgers mittels einem unteren Koppelabschnitt miteinander gekoppelt sind, sodass der Förderrinnenträger einen formrohrartigen Aufbau aufweist. Von Vorteil ist hierbei, dass der Förderrinnenträger durch diese Maßnahme einen kompakten Aufbau aufweisen kann, wobei der Förderrinnenträger durch den formrohrartigen Aufbau gute Schwingungseigenschaften aufweisen kann.

Darüber hinaus kann vorgesehen sein, dass der Vibrationsantrieb innerhalb des formrohrartigen Aufbau des Förderrinnenträgers angeordnet ist. Durch diese Maßnahme kann der komplette Vibrationsförderer einen kompakten Aufbau aufweisen.

Vorteilhaft ist auch eine Ausprägung, gemäß welcher vorgesehen sein kann, dass der Förderrinnenträger zumindest teilweise als Schweißbaugruppe, insbesondere als Laserschweißbaugruppe, ausgebildet ist. Durch diese Maßnahme kann der Förderrinnenträger einen stabilen Aufbau aufweisen und somit gute Vibrationseigenschaften aufweisen.

Gemäß einer Weiterbildung ist es möglich, dass die erste Seitenwand des Förderrinnenträgers als Blechbiegeteil ausgebildet ist, wobei zumindest einer der beiden Koppelabschnitte als Biegelasche ausgebildet ist, welcher an die erste Seitenwand anschließt. Dies ermöglicht einen einfachen Aufbau des Förderrinnenträgers.

Ferner kann es zweckmäßig sein, wenn die zweite Seitenwand des Förderrinnenträgers mittels Befestigungsmittel mit den Koppelabschnitten gekoppelt ist. Durch diese Maßnahme kann der Förderrinnenträger einfach zusammengebaut werden. Optional kann die zweite Seitenwand zusätzlich zu dem Befestigungsmittel auch mittels einer Schweißverbindung mit den Koppelabschnitten gekoppelt sein.

Darüber hinaus kann vorgesehen sein, dass die Förderrinne mit einer der Seitenwände des Förderrinnenträgers gekoppelt ist. Von Vorteil ist hierbei, dass die Förderrinne eine gute Anbindung an den Förderrinnenträger aufweisen kann.

Weiters kann vorgesehen sein, dass die Förderrinne mittels einem Trägerelement mit einem Koppelelement verbunden ist, wobei das Koppelelement mit einer der Seitenwände des Förderrinnenträgers gekoppelt ist. Von Vorteil ist hierbei, dass durch die Trägerelemente die Förderrinne zum Förderrinnenträger beabstandet werden kann.

Gemäß einer besonderen Ausprägung ist es möglich, dass die Trägerelemente aus Flacherzeugnissen ausgebildet sind, welche vertikal stehend zwischen der Förderrinne und dem Koppelelement verbaut sind. Derartige Flacherzeugnisse können beispielsweise Flacheisen oder Blechwerkstücke sein. Durch die vertikale Anordnung der Trägerelemente können diese bei relativ kleiner Dimensionierung in vertikaler Richtung hohe Kräfte aufnehmen. Darüber hinaus bieten die vertikal angeordneten Trägerelemente nur eine geringe Auflagefläche für Einzelteile, sodass diese wieder gut in den Schüttgutbehälter zurückfallen können.

Entsprechend einer vorteilhaften Weiterbildung kann vorgesehen sein, dass zusätzlich zu den Trägerelementen zumindest ein Knotenelement ausgebildet ist, welches horizontal liegend zwischen der Förderrinne und dem Koppelelement oder einem Trägerelement und dem Koppelelement angeordnet ist. Ein derartiges Knotenelement kann zur Kraftübertragung von in Förderrichtung wirkenden Kräften zwischen der Förderrinne und dem Förderrinnenträger dienen. Dadurch können die Beschleunigungen von Förderrinnenträger auf die Förderrinne übertragen werden.

Insbesondere kann es vorteilhaft sein, wenn der Vibrationsantrieb zumindest einen Elektromagneten umfasst. Mittels einem Elektromagneten lassen sich hochfrequente Schwingungen einfach erzeugen. Darüber hinaus ist ein Vibrationsantrieb mittels einem Elektromagneten mit nur einem geringen Verschleiß behaftet und weist somit eine hohe Langzeitbeständigkeit bzw. Lebensdauer auf.

Ferner kann vorgesehen sein, dass der Elektromagnet mittels einem im Vergleich zum ersten Federelement starren Magnethalter mit dem Basiselement gekoppelt ist.

Darüber hinaus kann vorgesehen sein, dass am Förderrinnenträger ein Blechpaket befestigt ist, welches mit dem Elektromagneten zusammenwirkt. Durch das Blechpaket, welches am Förderrinnenträger befestigt ist bzw. durch die gefederte Aufhängung des Förderrinnenträgers relativ zum Basiselement kann der Förderrinnenträger mittels dem Elektromagneten, welcher starr mit dem Basiselement gekoppelt ist, in Schwingung versetzt werden. Insbesondere kann mittels dem Elektromagneten eine in Förderrichtung wirkende Kraft auf den Förderrinnenträger ausgeübt werden. Diese in Förderrichtung wirkende Kraft bewirkt eine Beschleunigung des Förderrinnenträgers. Insbesondere kann vorgesehen sein, dass der Elektromagnet besonders in Förderrichtung starr zum Basiselement gekoppelt ist. Der Magnethalter muss somit in Förderrichtung ein hohes Widerstandsmoment aufweisen. Das erste Federelement jedoch muss in Förderrichtung ein geringeres Widerstandsmoment als der Magnethalter aufweisen.

Vorteilhaft ist auch eine Ausprägung, gemäß welcher vorgesehen sein kann, dass ein Tilgergewicht ausgebildet ist, welches mittels zumindest einem zweiten Federelement mit dem Basiselement gekoppelt ist. Dies bringt den überraschenden Vorteil mit sich, dass vom Vibrationsförderer nur sehr geringe Schwingungen in den Grundrahmen eingeleitet werden und somit der Hallenboden in dem der Vibrationsförderer aufgestellt ist, nur wenig belastet wird.

Gemäß einer Weiterbildung ist es möglich, dass das erste Federelement als Blattfeder ausgebildet ist, welche in einem ersten Winkel zwischen 2° und 30°, insbesondere zwischen 6° und 15°, bevorzugt zwischen 9° und 11° zur Vertikalen angeordnet ist. Eine derart angeordnete Blattfeder bringt den Vorteil mit sich, dass die Einzelteile in der Förderrinne gut gefördert werden können.

Ferner kann es zweckmäßig sein, wenn dass das zweite Federelement als Blattfeder ausgebildet ist, welche in einem zweiten Winkel zwischen 2° und 30°, insbesondere zwischen 6° und 15°, bevorzugt zwischen 9° und 11° zur Vertikalen angeordnet ist. Durch diese Maßnahme kann eine gute Schwingungsdämpfung gegenüber dem Grundrahmen erreicht werden.

Darüber hinaus kann vorgesehen sein, dass das erste Federelement und das zweite Federelement parallel zueinander angeordnet sind. Durch diese Maßnahme kann eine gute Schwingungsdämpfung gegenüber dem Grundrahmen erreicht werden.

Weiters kann vorgesehen sein, dass das Basiselement mittels zumindest einem dritten Federelement mit einem Grundrahmen gekoppelt ist. Durch diese Maßnahme kann eine gute Schwingungsdämpfung gegenüber dem Grundrahmen erreicht werden.

Gemäß einer besonderen Ausprägung ist es möglich, dass die Förderrinne und/oder der Förderrinnenträger modular aufgebaut sind, wobei ein Förderrinnensegment und/oder ein Förderrinnenträgersegment eine Normlänge aufweisen. Von Vorteil ist hierbei, dass durch diese Maßnahme die Einzelteile des Vibrationsförderers in einer Serienfertigung gefertigt werden können und entsprechend den aktuellen Erfordernissen modular aneinander gesetzt werden können. Dass die Förderrinnensegmente bzw. die Förderrinnenträgersegmente eine Normlänge aufweisen bedeutet, dass sie alle die gleiche Länge aufweisen.

Weiters kann vorgesehen sein, dass die Förderrinne in Förderrichtung gesehen links und rechts Abwurfstellen zum Ausscheiden von Einzelteilen aufweist. Besonders bei einer derart aufgebauten Förderrinne weist die seitliche Anordnung der Förderrinne neben dem Förderrinnenträger den Vorteil auf, dass jene Einzelteile, welche aus der Förderrinne herausfallen, direkt in den Schüttgutbehälter zurückgeleitet werden können. Hierbei ist es egal, auf welcher Seite der Förderrinne die Einzelteile von der Förderrinne herausfallen.

Darüber hinaus kann vorgesehen sein, dass eine Breite des Förderrinnenträgers kleiner ist als eine Höhe des Förderrinnenträgers. Insbesondere kann vorgesehen sein, dass die Breite des Förderrinnenträgers zwischen 10 % und 80 %, insbesondere zwischen 15 % und 30 % der Höhe des Förderrinnenträgers beträgt.

Ein Vibrationsförderer kann auch als Schwingförderer bezeichnet werden.

Eine Förderrinne kann auch als Schikane bezeichnet werden.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung eines Ausführungsbeispiels einer Vereinzelungsvorrichtung;
- Fig. 2: eine perspektivische Ansicht einer Förderrinne;
- Fig. 3: eine perspektivische Ansicht eines Förderrinnenträgers;
- Fig. 4: eine Explosionsansicht eines Förderrinnenträgers;
- Fig. 5: eine Seitenansicht eines ersten Ausführungsbeispiels des Innenlebens von einem Förderrinnenträger;
- Fig. 6: eine Seitenansicht eines zweiten Ausführungsbeispiels des Innenlebens von einem Förderrinnenträger;
- Fig. 7: eine Seitenansicht eines Ausführungsbeispiels eines modular aufgebauten Vibrationsförderers;
- Fig. 8: eine Seitenansicht eines weiteren Ausführungsbeispiels eines modular aufgebauten Vibrationsförderers.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

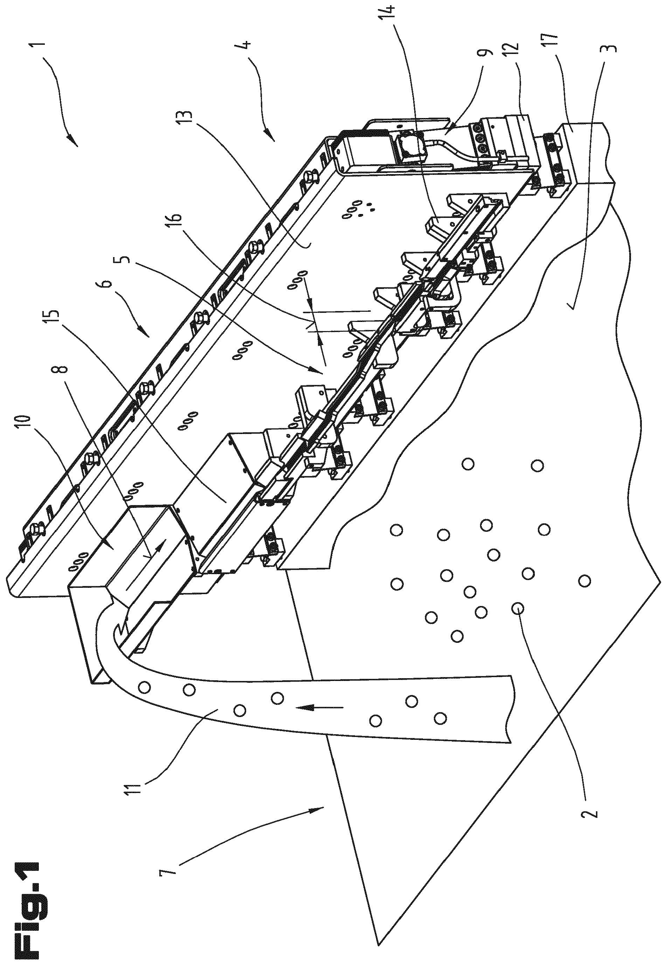

Fig. 1 zeigt in einer perspektivischen Ansicht eine schematische Darstellung eines ersten Ausführungsbeispiels einer Vereinzelungsvorrichtung 1. Die Vereinzelungsvorrichtung 1 dient zum Vereinzeln von Einzelteilen 2, welche der Vereinzelungsvorrichtung 1 in Form von Schüttgut 3 zugeführt werden. Das Schüttgut 3 wird hierbei in einen Schüttgutbehälter 7 der Vereinzelungsvorrichtung 1 zugeführt. Weiters ist ein Vibrationsförderer 4 vorgesehen, welcher eine Förderrinne 5 aufweist, die zum Fördern und/oder zum Aussorten und/oder zum Ausrichten von Einzelteilen 2 dient. Die Förderrinne 5 weist hierbei verschiedene Bereiche auf, in welchen die Einzelteile 2 richtig orientiert bzw. falsch orientierte Einzelteile 2 seitlich aus der Förderrinne 5 ausgeschieden werden. Die falsch orientierten Einzelteile 2 können hierbei an definierten Abwurfstellen seitlich aus der Förderrinne 5 ausgeschieden werden. Insbesondere kann vorgesehen sein, dass die Abwurfstellen in Förderrichtung 8 gesehen sowohl an der linken Seite der Förderrinne 5 als auch an der rechten Seite der Förderrinne 5 angeordnet sind.

Die Einzelteile 2 werden hierbei in Förderrichtung 8 entlang der Förderrinne 5 geführt. Zum Transport der Einzelteile 2 wird mittels einem Vibrationsantrieb 9, welcher auf den Förderrinnenträger 6 wirkt, die mit dem Förderrinnenträger 6 gekoppelte Förderrinne 5 in eine Schwingung versetzt.

Insbesondere kann vorgesehen sein, dass die Einzelteile 2 in einem Übergabebereich 10 der Förderrinne 5 zugeführt werden.

In einem ersten Ausführungsbeispiel ist es denkbar, dass die Einzelteile 2 direkt aus dem Schüttgutbehälter 7 mit Hilfe der Schwerkraft in den Übergabebereich 10 überführt werden. Der Schüttgutbehälter 7 muss hierbei oberhalb des Übergabebereiches 10 angeordnet sein. In einem weiteren Ausführungsbeispiel wie in Fig. 1 dargestellt, ist es auch denkbar, dass die Einzelteile 2 mittels einer Fördervorrichtung 11 aus dem Schüttgutbehälter 7 in den Übergabebereich 10 gefördert werden. Die Fördervorrichtung 11 ist schematisch dargestellt und kann durch verschiedenste bekannte Fördervorrichtungen, wie Stufenförderer, Bandförderer, Förderschnecken und dergleichen gebildet sein.

Wie aus Fig. 1 weiters ersichtlich, ist die Förderrinne 5 seitlich des Förderrinnenträgers 6 angeordnet, wodurch die aus der Förderrinne 5 ausgeschiedenen Einzelteile 2 direkt in den Schüttgutbehälter 7 zurückfallen können, welcher unterhalb der Förderrinne 5 angeordnet sein kann. Dies ist unabhängig davon, an welcher Seite der Förderrinne 5 die Einzelteile 2 herausfallen.

Der Vibrationsförderer 4 weist ein Basiselement 12 auf, gegenüber welchem der Förderrinnenträger 6 federnd bzw. schwingbar aufgehängt ist. Der Vibrationsantrieb 9 kann zwischen dem Basiselement 12 und dem Förderrinnenträger 6 wirken und somit den Förderrinnenträger 6 relativ zum Basiselement 12 in Schwingung versetzen.

Wie aus Fig. 1 weiters ersichtlich kann ein Koppelelement 13 vorgesehen sein, welches am Förderrinnenträger 6 befestigt ist und an welchem die Förderrinne 5 angeordnet ist. Insbesondere kann vorgesehen sein, dass die Förderrinne 5 mittels Trägerelementen 14 am Koppelelement 13 befestigt ist. Die Trägerelemente 14 können beispielsweise durch ein Trennverfahren wie Laserschneiden oder Plasmaschneiden oder Wasserstrahlschneiden aus einem ebenen Blechbauteil herausgeschnitten werden. Insbesondere kann vorgesehen sein, dass die Trägerelemente 14 vertikal stehend an die Förderrinne 5 gekoppelt sind. Die Förderrinne 5 kann mittels einer Schweißverbindung, insbesondere einer Laserschweißverbindung mit den Trägerelementen 14 verbunden sein. Weiters können die Trägerelemente 14 mittels einer Schweißverbindung, insbesondere einer Laserschweißverbindung mit dem Koppelelement 13 verbunden sein. Das Koppelelement 13 kann mittels Befestigungsmittel oder alternativ oder zusätzlich auch mittels einer Schweißverbindung mit dem Förderrinnenträger 6 gekoppelt sein. Weiters kann vorgesehen sein, dass das Koppelelement 13 als Blechbauteil ausgebildet ist.

Weiters kann zumindest ein Knotenelement 15 vorgesehen sein, welches horizontal liegend zwischen einem Trägerelement 14 und dem Koppelelement 13 oder zwischen der Förderrinne 5 und dem Koppelelement 13 angeordnet bzw. mit diesen verbunden ist. Das Knotenelement 15 dient zur horizontalen Kraftübertragung zwischen der Förderrinne 5 und dem Förderrinnenträger 6.

In einem weiteren Ausführungsbeispiel kann das Koppelelement 13 natürlich auch weggelassen werden und die Trägerelemente 14 bzw. das Knotenelement 15 direkt am Förderrinnenträger 6 befestigt werden.

Die Trägerelemente 14 erfüllen insbesondere den Zweck, dass die Förderrinne 5 in einem seitlichen Abstand 16 zum Koppelelement 13 bzw. zum Förderrinnenträger 6 angeordnet ist. Dadurch ist die Förderrinne 5 zwischen den einzelnen Trägerelementen 14 brückenartig freitragend angeordnet, wodurch die falsch orientierten Einzelteile 2 an beiden Seiten der Förderrinne 5 in den Schüttgutbehälter 3 zurückfallen können.

Weiters kann vorgesehen sein, dass der Vibrationsförderer 4, insbesondere das Basiselement 12 des Vibrationsförderers 4 an einem Grundrahmen 17, welcher auch als Untergestell bezeichnet werden kann, angeordnet ist. Der Schüttgutbehälter 7 kann neben dem Grundrahmen 17 unterhalb der Förderrinne 5 angeordnet sein. Der Grundrahmen 17 kann ebenso wie der Vibrationsförderer 4 einen schlanken Aufbau aufweisen, wobei die Breite des Grundrahmens 17 an die Breite des Vibrationsförderers 4 angepasst werden kann.

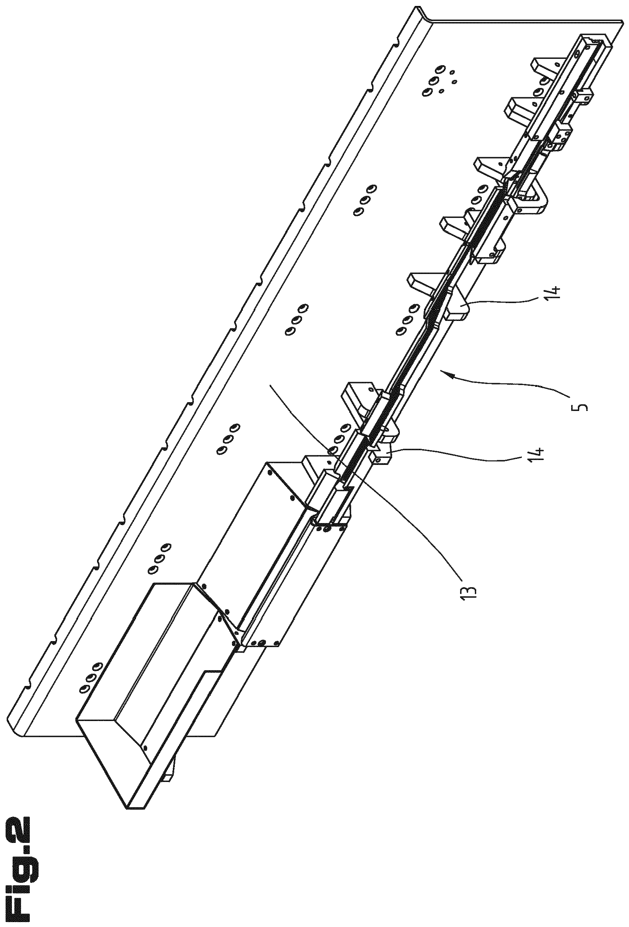

Fig. 2 zeigt eine Detailansicht des Koppelelementes 13 mit der daran angeordneten Förderrinne 5. Aus Fig. 2 ist gut ersichtlich, dass über die Länge der Förderrinne 5 verteilt mehrere der Trägerelemente 14 angeordnet sein können.

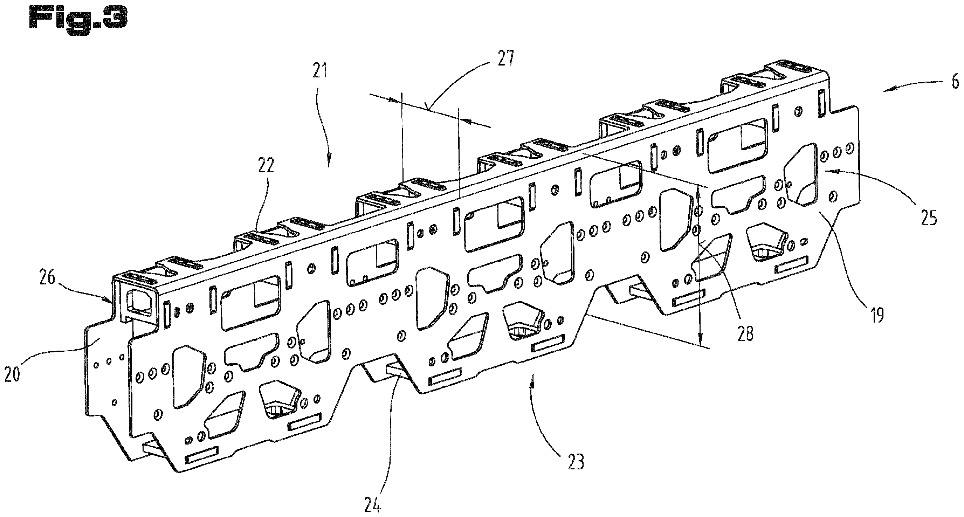

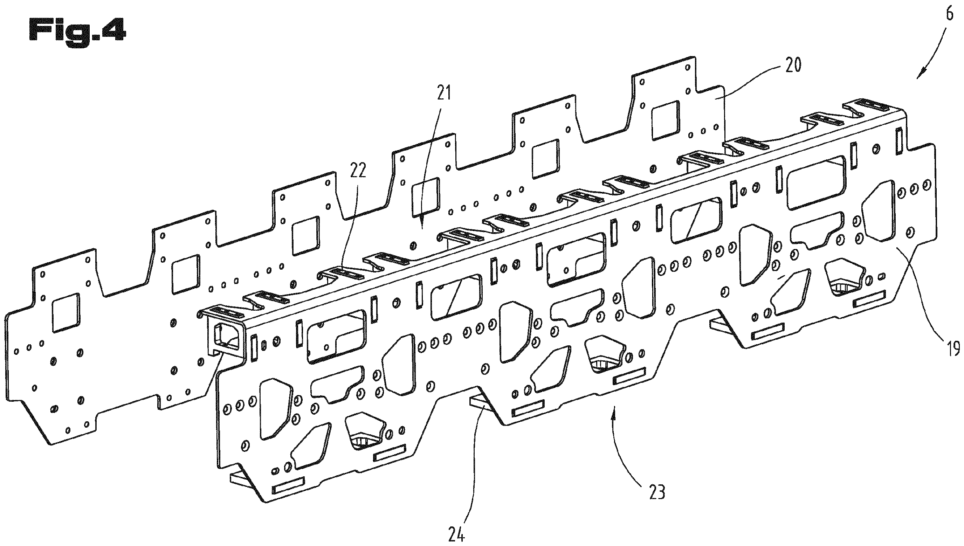

In den Fig. 3 und 4 ist der Förderrinnenträger 6 in einer Detailansicht dargestellt, wobei der Förderrinnenträger 6 in der Fig. 3 zusammengebaut ist und in der Fig. 4 in einer Explosionsansicht dargestellt ist.

Wie aus den Fig. 3 und 4 ersichtlich, weist der Förderrinnenträger 6 eine erste Seitenwand 19 und eine zweite Seitenwand 20 auf, welche an einer Oberseite 21 mit einem oberen Koppelabschnitt 22 und an einer Unterseite 23 mit einem unteren Koppelabschnitt 24 verbunden bzw. miteinander gekoppelt sind. Der Förderrinnenträger 6 kann somit einen hohlprofilähnlichen Aufbau aufweisen.

Weiters kann vorgesehen sein, dass in der ersten Seitenwand 19 und/oder in der zweiten Seitenwand 20 diverse Ausnehmungen 25 bzw. Bohrungen vorgesehen sind, welche zur Aufnahme von Funktionsbauteilen dienen.

Der obere Koppelabschnitt 22 bzw. der untere Koppelabschnitt 24 kann in Form von Verstrebungen ausgebildet sein, welche sich lokal zwischen der ersten Seitenwand 19 und der zweiten Seitenwand 20 erstrecken. Insbesondere kann vorgesehen sein, dass der untere Koppelabschnitt 24 mehrere Blechteile aufweist, welche mit der ersten Seitenwand 19 verschweißt sind. Ebenso können im oberen Koppelabschnitt 22 Bleche vorgesehen sein, welche mit der ersten Seitenwand 19 verschweißt sind. Weiters können die Ausnehmungen 25 in der ersten Seitenwand 19 bzw. in der zweiten Seitenwand 20 zum teilweisen Einstecken der oberen Koppelabschnitte 22 und/oder unteren Koppelabschnitte 24 dienen.

Weiters oder alternativ dazu kann vorgesehen sein, dass der obere Koppelabschnitt 22 und/oder der untere Koppelabschnitt 24 teilweise in Form von Biegelaschen ausgebildet ist, welche direkt an die erste Seitenwand 19 anschließen.

Wie aus Fig. 4 ersichtlich, kann in einem ersten Produktionsschritt die erste Seitenwand 19 zusammen mit den Koppelabschnitten 22, 24 ein C-förmiges Profil bilden, in welchem die einzelnen Elemente des Vibrationsantriebs 9 aufgenommen werden können. Anschließend kann in einem weiteren Produktionsschritt die zweite Seitenwand 20 mit den Koppelabschnitten 22, 24 verbunden werden, sodass das geschlossene Hohlprofil ausgebildet ist. Die zweite Seitenwand 20 kann hierbei mittels Befestigungsmittel 26 mit den Koppelabschnitten 22, 24 befestigt sein. Zusätzlich oder alternativ dazu kann vorgesehen sein, dass die zweite Seitenwand 20 mittels einer Schweißverbindung mit den Koppelabschnitten 22, 24 verbunden ist.

Wie aus Fig. 3 weiters ersichtlich, kann vorgesehen sein, dass eine Breite 27 des Förderrinnenträgers 6 kleiner ist als eine Höhe 28 des Förderrinnenträgers 6. Insbesondere kann vorgesehen sein, dass die Breite 27 des Förderrinnenträgers 6 zwischen 10 % und 80 %, insbesondere zwischen 15 % und 30 % der Höhe 28 des Förderrinnenträgers 6 beträgt.

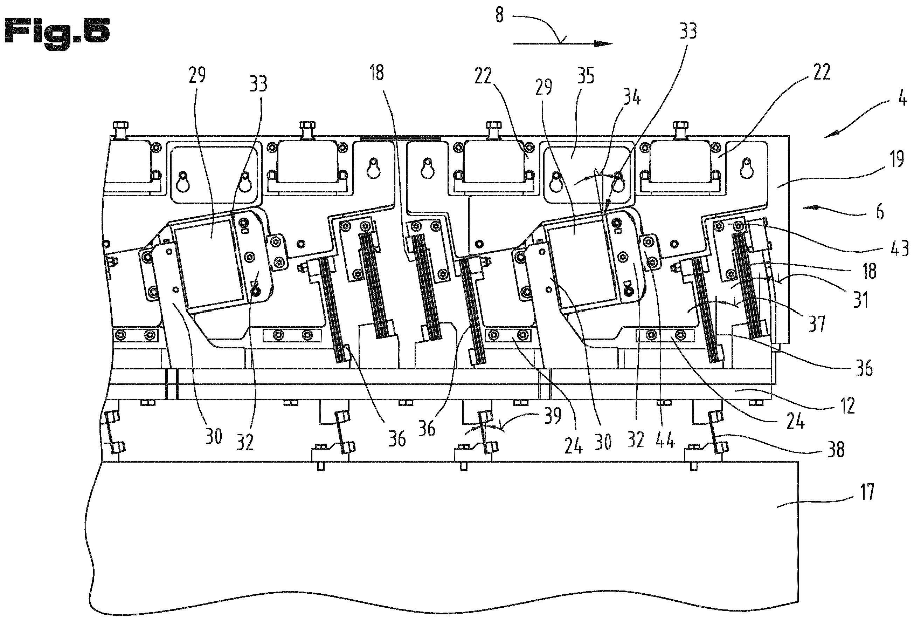

Fig. 5 zeigt eine Seitenansicht des Vibrationsförderers 4, wobei die zweite Seitenwand 20 ausgeblendet wurde, sodass das Innenleben der im Förderrinnenträger 6 angeordneten Bauteile sichtbar ist.

Wie aus Fig. 5 ersichtlich, kann vorgesehen sein, dass der Förderrinnenträger 6 mittels zumindest einem ersten Federelement 18 mit dem Basiselement 12 gekoppelt ist. Insbesondere kann hierbei vorgesehen sein, dass zumindest eine der Seitenwände 19, 20 mittels einer Verbindungsplatte 43 mit dem ersten Federelement 18 gekoppelt ist. Insbesondere kann vorgesehen sein, dass die Verbindungsplatte 43 mit dem Förderrinnenträger 6 verschraubt ist und das erste Federelement 18 an der Verbindungsplatte 43 geklemmt ist.

Insbesondere ist vorgesehen, dass über die Länge des Vibrationsförderers 4 verteilt in Förderrichtung 8 beabstandet, mehrere erste Federelemente 18 angeordnet sind.

Wie aus Fig. 5 ersichtlich, können die ersten Federelemente 18 in Form von Blattfedern ausgebildet sein, welche sich zwischen dem Förderrinnenträger 6 und dem Basiselement 12 erstrecken. Mit anderen Worten ausgedrückt, ist mittels der ersten Federelemente 18 der Förderrinnenträger 6 mit dem Basiselement 12 gekoppelt.

Um eine freie Schwingbarkeit des Förderrinnenträgers 6 zu erreichen, muss darauf geachtet werden, dass der Förderrinnenträger 6 nicht mit dem Basiselement 12 bzw. mit den ersten Federelementen 18 koliert. Weiters kann vorgesehen sein, dass die ersten Federelemente 18 in einem ersten Winkel 31 von der Vertikalen ausgehend geneigt angeordnet sind. Durch Anordnung der ersten Federelemente 18 im ersten Winkel 31 kann bei einer Schwingung des Förderrinnenträgers 6 die Förderbewegung eingeleitet werden.

Um den Förderrinnenträger 6 relativ zum Basiselement 12 in Schwingung zu versetzten, ist ein Elektromagnet 29 vorgesehen, welcher mittels einem Magnethalter 30 im Vergleich zum ersten Federelement 18 starr mit dem Basiselement 12 gekoppelt ist. Der Elektromagnet 29 wirkt bei Bestromung auf ein Blechpaket 32 ein, welches mit dem Förderrinnenträger 6 gekoppelt ist. Insbesondere kann vorgesehen sein, dass das Blechpaket 32 mittels einer Verbindungsplatte 44 mit einer Seitenwand 19, 20 des Förderrinnenträgers 6 gekoppelt ist.

Dadurch wird der Förderrinnenträger 6 relativ zum Basiselement 12 in annähernd horizontaler Richtung verschoben, wobei die ersten Federelemente 18 dabei gebogen werden. Hierzu ist es notwendig, dass zwischen dem Elektromagneten 29 und dem Blechpaket 32 ein Luftspalt 33 ausgebildet ist. Wenn nun der Elektromagnet 29 nicht mehr bestromt wird, und somit seine Magnetwirkung verliert, federt der Förderrinnenträger 6 aufgrund der ersten Federelemente 18 in Förderrichtung 8 zurück. Dieser Vorgang wird in kurzer Zeit mehrmals wiederholt, wodurch ein Vibrieren bzw. Schwingen des Förderrinnenträgers 6 entsteht. Durch die winkelige Anordnung der ersten Federelemente 18 entsteht hierbei eine leichte Schupfbewegung. Diese entsteht dadurch, dass der Förderrinnenträger 6 nicht in horizontaler Richtung schwingt, sondern ebenfalls um den ersten Winkel 31 geneigt schwingt.

Weiters kann vorgesehen sein, dass der Elektromagnet 29 bzw. das Blechpaket 32 in einem Elektromagnetwinkel 34 von der Vertikalen abweichend ausgerichtet sind. Der Elektromagnetwinkel 34 kann hierbei gleich groß sein wie der erste Winkel 31.

Um ein freies Schwingen des Förderrinnenträgers 6 zu erreichen, muss der Luftspalt 33 zwischen dem Elektromagneten 29 und dem Blechpaket 32 so groß gewählt werden, dass diese Bauteile während dem Schwingen einander nicht berühren.

Natürlich kann, wie aus Fig. 5 ersichtlich, vorgesehen sein, dass über die Länge des Vibrationsförderers 4 mehrere der Elektromagneten 29 bzw. der Blechpakete 32 angeordnet sind.

Wie aus Fig. 5 weiters ersichtlich, kann vorgesehen sein, dass innerhalb des Förderrinnenträgers 6 Tilgergewichte 35 angeordnet sind, welche mittels einem zweiten Federelement 36 mit dem Basiselement 12 gekoppelt sind. Hierbei können ebenfalls mehrere zweite Federelemente 36 in Form von Blattfedern ausgebildet sein.

Das Tilgergewicht 35 ist ebenfalls frei schwingbar mit dem Basiselement 12 gekoppelt. Die Tilgergewichte 35 dienen dazu, um den auf das Basiselement 12 einwirkenden Kräften durch den Förderrinnenträger 6 entgegen zu wirken und somit die vom Basiselement 12 auf den Grundrahmen 17 wirkenden Schwingkräfte möglichst aufzuheben.

Das zweite Federelement 36 kann ebenfalls in einem zweiten Winkel 37 aus der Vertikalen geneigt angeordnet sein. Der zweite Winkel 37 kann hierbei gleich groß sein wie der erste Winkel 31.

Um die vom Basiselement 12 in den Grundrahmen 17 eingeleiteten Schwingkräfte weiter zu minimieren, kann vorgesehen sein, dass das Basiselement 12 mittels einem dritten Federelement 38 mit dem Grundrahmen 17 gekoppelt ist. Das dritte Federelement 38 kann hierbei ebenfalls als Blattfeder ausgebildet sein, welche in einem dritten Winkel 39 zur Vertikalen angeordnet sein kann. Der dritte Winkel 39 kann hierbei gleich groß sein wie der erste Winkel 31.

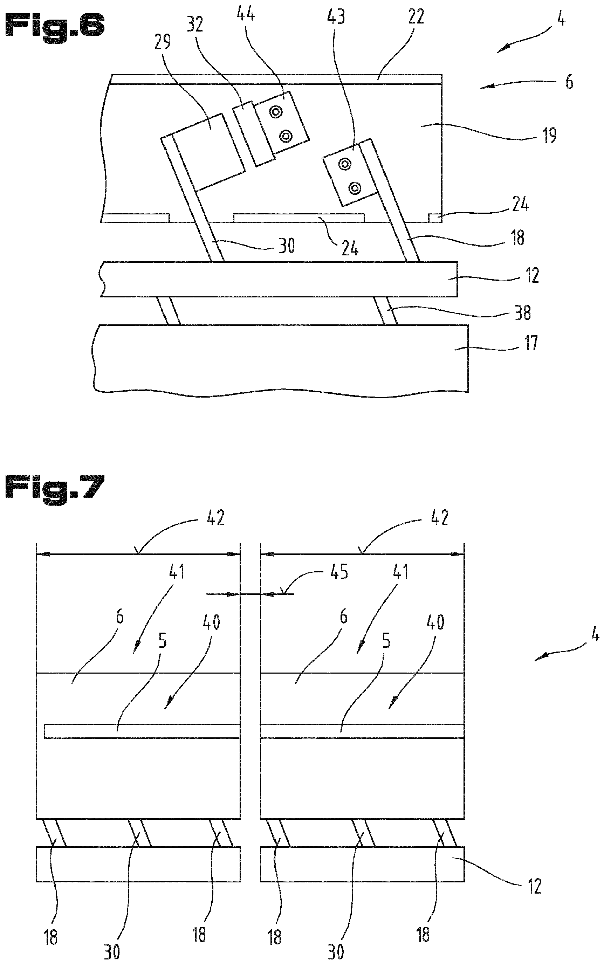

In der Fig. 6 ist eine weitere und gegebenenfalls für sich eigenständige Ausführungsform des Vibrationsförderers 4 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 6 ersichtlich, kann vorgesehen sein, dass der Magnethalter 30 für den Elektromagneten 29 ebenfalls als Blattfeder ausgebildet ist, wodurch auch der Elektromagnet 29 schwingbar aufgenommen ist. Bei einem derartigen Aufbau wird bei Bestromung des Elektromagneten 29 nicht nur der Förderrinnenträger 6 in Richtung zum Elektromagneten 29 bewegt, sondern auch der Elektromagnet 29 in Richtung zum Förderrinnenträger 6 bewegt. Durch diese Maßnahme kann bei entsprechender Auslegung der Masse der Elektromagnete 29 bzw. des Förderrinnenträgers 6 sowie der Federsteifigkeiten des Magnethalters 30 und des ersten Federelementes 18 eine gegenseitige Aufhebung der Beschleunigungskräfte erreicht werden. Dadurch kann das Tilgergewicht 35 auch weggelassen werden.

Fig. 7 zeigt ein weiteres Ausführungsbeispiel des Vibrationsförderers 4. Wie aus Fig. 7 ersichtlich, kann vorgesehen sein, dass der Vibrationsförderer 4 modular aufgebaut ist, wobei die Förderrinne 5 in mehrere Förderrinnensegmente 40 unterteilt ist und der Förderrinnenträger 6 in mehrere Förderrinnenträgersegmente 41 unterteilt ist. Ein Förderrinnensegment 40 ist jeweils einem Förderrinnenträgersegment 41 zugeordnet. Insbesondere kann vorgesehen sein, dass die Förderrinnensegmente 40 bzw. die Förderrinnenträgersegmente 41 eine Normlänge 42 aufweisen. Zwischen den einzelnen aneinander gereihten Förderrinnensegmenten 40 bzw. Förderrinnenträgersegmenten 41 ist ein Abstand 45 ausgebildet. Der Abstand 45 ist vorzugsweise so groß gewählt, dass die einzelnen Förderrinnensegmente 40 bzw. Förderrinnenträgersegmente 41 beim Schwingen miteinander nicht kollidieren. Gleichzeitig ist der Abstand 45 so klein gewählt, dass die Einzelteile 2 problemlos zwischen den einzelnen Förderrinnensegmenten 40 transportiert werden können.

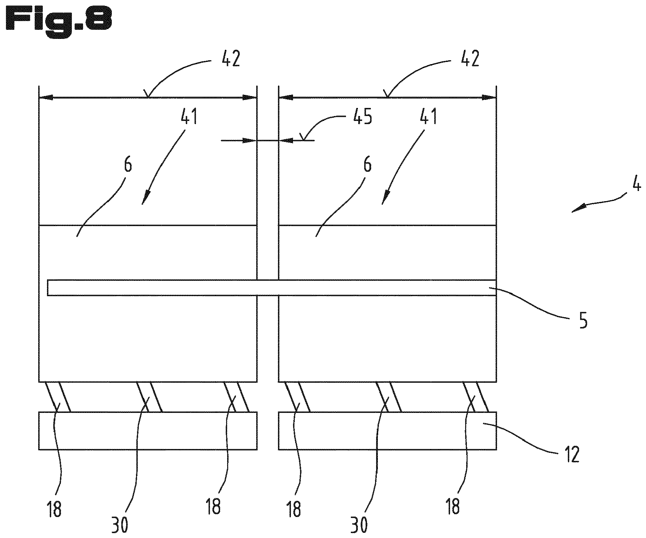

Fig. 8 zeigt ein weiteres Ausführungsbeispiel des Vibrationsförderers 4. Wie aus Fig. 8 ersichtlich, kann vorgesehen sein, dass nur der Förderrinnenträger 6 in einzelne Förderrinnenträgersegmente 41 aufgeteilt ist und dass die Förderrinne 5 durchgehend ausgebildet ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Vereinzelungsvorrichtung | 31 | erster Winkel |
| 2 | Einzelteil | 32 | Blechpaket |
| 3 | Schüttgut | 33 | Luftspalt |
| 4 | Vibrationsförderer | 34 | Elektromagnetwinke |
| 5 | Förderrinne | 35 | Tilgergewicht |
| 6 | Förderrinnenträger | 36 | zweites Federelement |
| 7 | Schüttgutbehälter | 37 | zweiter Winkel |
| 8 | Förderrichtung | 38 | drittes Federelement |
| 9 | Vibrationsantrieb | 39 | dritter Winkel |
| 10 | Übergabebereich | 40 | Förderrinnensegment |
| 11 | Fördervorrichtung | 41 | Förderrinnenträgersegment |
| 12 | Basiselement | 42 | Normlänge |
| 13 | Koppelelement | 43 | Verbindungsplatte Förderrinnenträger |
| 14 | Trägerelement | | |
| 15 | Knotenelement | 44 | Verbindungsplatte Blechpaket |
| 16 | seitlicher Abstand | 45 | Abstand |
| 17 | Grundrahmen | | |
| 18 | erstes Federelement | | |
| 19 | erste Seitenwand | | |
| 20 | zweite Seitenwand | | |
| 21 | Oberseite | | |
| 22 | oberer Koppelabschnitt | | |
| 23 | Unterseite | | |
| 24 | unterer Koppelabschnitt | | |
| 25 | Ausnehmung | | |
| 26 | Befestigungsmittel | | |
| 27 | Breite | | |
| 28 | Höhe | | |
| 29 | Elektromagnet | | |
| 30 | Magnethalter | | |

## Patentansprüche

1. Vibrationsförderer (4) mit
- einer Förderrinne (5);
- einem Förderrinnenträger (6), an welchem die Förderrinne (5) angeordnet ist;
- und einem Vibrationsantrieb (9),
**dadurch gekennzeichnet, dass**
die Förderrinne (5) seitlich am Förderrinnenträger (6) angeordnet ist.

2. Vibrationsförderer nach Anspruch 1, **dadurch gekennzeichnet, dass** der Förderrinnenträger (6) mittels zumindest einem ersten Federelement (18) mit einem Basiselement (12) gekoppelt ist.

3. Vibrationsförderer nach Anspruch 1 oder 2, **dadurch gekennzeichnet, dass** der Förderrinnenträger (6) eine erste Seitenwand (19) und eine zweite Seitenwand (20) aufweist, welche an einer Oberseite (21) des Förderrinnenträgers (6) des mittels einem oberen Koppelabschnitt (22) und an einer Unterseite (23) des Förderrinnenträgers (6) mittels einem unteren Koppelabschnitt (24) miteinander gekoppelt sind, sodass der Förderrinnenträger (6) einen formrohrartigen Aufbau aufweist.

4. Vibrationsförderer nach Anspruch 3, **dadurch gekennzeichnet, dass** der Vibrationsantrieb (9) innerhalb des Förderrinnenträgers (6) angeordnet ist.

5. Vibrationsförderer nach Anspruch 3 oder 4, **dadurch gekennzeichnet, dass** der Förderrinnenträger (6) zumindest teilweise als Schweißbaugruppe, insbesondere als Laserschweißbaugruppe, ausgebildet ist.

6. Vibrationsförderer nach einem der Ansprüche 3 bis 5, **dadurch gekennzeichnet, dass** die erste Seitenwand (19) des Förderrinnenträgers (6) als Blechbiegeteil ausgebildet ist, wobei zumindest einer der beiden Koppelabschnitte (22, 24) als Biegelasche ausgebildet ist, welcher an die erste Seitenwand (19) anschließt.

7. Vibrationsförderer nach einem der Ansprüche 3 bis 6, **dadurch gekennzeichnet, dass** die zweite Seitenwand (20) des Förderrinnenträgers (6) mittels Befestigungsmittel (26) mit den Koppelabschnitten (22) gekoppelt ist.

8. Vibrationsförderer nach einem der Ansprüche 3 bis 7, **dadurch gekennzeichnet, dass** die Förderrinne (5) mit einer der Seitenwände (19, 20) des Förderrinnenträgers (6) gekoppelt ist.

9. Vibrationsförderer nach einem der Ansprüche 3 bis 8, **dadurch gekennzeichnet, dass** die Förderrinne (5) mittels einem Trägerelement (14) mit einem Koppelelement (13) verbunden ist, wobei das Koppelelement (13) mit einer der Seitenwände (19, 20) des Förderrinnenträgers (6) gekoppelt ist.

10. Vibrationsförderer nach Anspruch 9, **dadurch gekennzeichnet, dass** die Trägerelemente (14) aus Flacherzeugnissen ausgebildet sind, welche vertikal stehend zwischen der Förderrinne (5) und dem Koppelelement (13) verbaut sind.

11. Vibrationsförderer nach Anspruch 9 oder 10, **dadurch gekennzeichnet, dass** zusätzlich zu den Trägerelementen (14) zumindest ein Knotenelement (15) ausgebildet ist, welches horizontal liegend zwischen der Förderrinne (5) und dem Koppelelement (13) oder einem Trägerelement (14) und dem Koppelelement (13) angeordnet ist.

12. Vibrationsförderer nach einem der vorhergehenden Ansprüche, **dadurch gekennzeichnet, dass** der Vibrationsantrieb (9) zumindest einen Elektromagneten (29) umfasst.

13. Vibrationsförderer nach Anspruch 12, **dadurch gekennzeichnet, dass** der Elektromagnet (29) mittels einem im Vergleich zum ersten Federelement (18) starren Magnethalter (30) mit dem Basiselement (12) gekoppelt ist.

14. Vibrationsförderer nach Anspruch 12 oder 13, **dadurch gekennzeichnet, dass** am Förderrinnenträger (6) ein Blechpaket (32) befestigt ist, welches mit dem Elektromagneten (29) zusammenwirkt.

15. Vibrationsförderer nach einem der Ansprüche 2 bis 14, **dadurch gekennzeichnet, dass** ein Tilgergewicht (35) ausgebildet ist, welches mittels zumindest einem zweiten Federelement (36) mit dem Basiselement (12) gekoppelt ist.

16. Vibrationsförderer nach einem der Ansprüche 2 bis 15, **dadurch gekennzeichnet, dass** das erste Federelement (18) als Blattfeder ausgebildet ist, welche in einem ersten Winkel (31) zwischen 2° und 30°, insbesondere zwischen 6° und 15°, bevorzugt zwischen 9° und 11° zur Vertikalen angeordnet ist.

17. Vibrationsförderer nach einem der Ansprüche 15 bis 16, **dadurch gekennzeichnet, dass** das zweite Federelement (36) als Blattfeder ausgebildet ist, welche in einem zweiten Winkel (37) zwischen 2° und 30°, insbesondere zwischen 6° und 15°, bevorzugt zwischen 9° und 11° zur Vertikalen angeordnet ist.

18. Vibrationsförderer nach einem der Ansprüche 2 bis 17, **dadurch gekennzeichnet, dass** das Basiselement (12) mittels zumindest einem dritten Federelement (38) mit einem Grundrahmen (17) gekoppelt ist.

19. Vibrationsförderer nach einem der vorhergehenden Ansprüche, **dadurch gekennzeichnet, dass** die Förderrinne (5) und/oder der Förderrinnenträger (6) modular aufgebaut sind, wobei ein Förderrinnensegment (40) und/oder ein Förderrinnenträgersegment (41) eine Normlänge (42) aufweisen.

20. Vibrationsförderer nach einem der vorhergehenden Ansprüche, **dadurch gekennzeichnet, dass** die Förderrinne (5) in Förderrichtung (8) gesehen links und rechts Abwurfstellen zum Ausscheiden von Einzelteilen (2) aufweist.
